Europäisches Patentamt

European Patent Office

Office européen des brevets

(11) Publication number: **0 161 320**
**B1**

(12) **EUROPEAN PATENT SPECIFICATION**

(45) Date of publication of patent specification: **12.10.88**

(21) Application number: **84903978.9**

(22) Date of filing: **25.10.84**

(86) International application number:
**PCT/JP84/00506**

(87) International publication number:
**WO 85/01952 09.05.85 Gazette 85/11**

(51) Int. Cl.⁴: **C 09 K 11/08, H 01 J 29/20**

(54) **COLOR CATHODE-RAY TUBE.**

(30) Priority: **31.10.83 JP 203958/83**

(43) Date of publication of application:
**21.11.85 Bulletin 85/47**

(45) Publication of the grant of the patent:
**12.10.88 Bulletin 88/41**

(84) Designated Contracting States:
**DE FR GB**

(56) References cited:
**US-A-3 649 555**

(73) Proprietor: **SONY CORPORATION**
**7-35 Kitashinagawa 6-Chome Shinagawa-ku**
**Tokyo 141 (JP)**

(72) Inventor: **KUBONIWA, Shigeo**
**Sony Corporation 7-35, Kitashinagawa 6-chome**
**Shinagawa-ku Tokyo 141 (JP)**
Inventor: **OKADA, Hideki**
**Sony Corporation 7-35, Kitashinagawa 6-chome**
**Shinagawa-ku Tokyo 141 (JP)**
Inventor: **TAMURA, Michio**
**Sony Corporation 7-35, Kitashinagawa 6-chome**
**Shinagawa-ku Tokyo 141 (JP)**

(74) Representative: **Thomas, Christopher Hugo**
**et al**
**D Young & Co 10 Staple Inn**
**London WC1V 7RD (GB)**

**Description**

This invention relates to colour cathode ray tubes, and particularly to multi-purpose colour cathode ray tubes which can be used as ordinary colour television picture tubes and also as colour display devices for use with light pen pick-up systems.

In a character display apparatus for displaying very small patterns such as characters and symbols in a terminal display apparatus, in order to obtain a reproduced picture of high definition, interlaced scanning is not used, but the scanning lines are sequentially scanned, so that position displacement between the adjacent scanning lines is avoided.

Recently, because of the introduction of home computers, a single cathode ray tube for multi-purpose use has been developed which can be used as an ordinary colour television picture tube and in a terminal display apparatus.

A problem with such a cathode ray tube is that when used with a light pen pick-up, the phosphors are required to have a relatively short decay time (that is the time for the brightness of the phosphor emission to decrease to 1/10 the brightness of the initial emission) so as to increase the pick-up accuracy.

In US—A—3649555 mixtures of red phosphors are disclosed e.g. of $Y_2O_3$:Eu or $Y_2O_2S$:Eu, $YVO_4$:Eu and (ZnCd)S:Ag, which are to be used in colour cathode-ray tubes in combination with green and blue phosphors.

In an ordinary colour television picture tube, the decay time of the green and blue phosphors is several tens of microseconds, and this is suitable for a light pen pick-up system. However, the rure earth phosphors generally used as red phosphors, for example, $Y_2O_2S$:Eu or $Y_1O_3$:Eu or $YVO_4$:Eu have a relatively long decay time, such as one millisecond. Thus such a red phosphor will interfere with the address detection.

According to the present invention there is provided a colour cathode ray tube having a coloqr phosphor screen formed by coating red, green and blue phosphors, and in which said red phosphor is made by mixing (ZnCd)S:Ag or (ZnCd)S:Cu phosphor with a rare earth phosphor in an amount of 5 to 30 weight percent relative to the total amount of said red phosphor; characterized in that:

in the case of (ZnCd)S:Ag, ZnS:CdS=2:8, and in the case of (ZnCd)S:Cu, ZnS:CdS=6:4.

The rare earth phosphor may, for example, be $Y_2O_2S$:Eu, $Y_2O_3$:Eu or $YVO_4$:Eu.

The invention will now be described by way of example.

In a colour cathode ray tube according to the present invention, the colour phosphor screen thereof is formed by respectively coating red, green and blue phosphors in a predetermined order to have a predetermined pattern, such as a stripe or dot pattern. The blue phosphor is made if, for example, ZnS:Ag and the green phosphor is made of, for example, ZnS:CuAl. The red phosphor is made by mixing red phosphor, (ZnCd)S:Ag (ZnS:CdS=2:8) to a rare earth phosphor, for example $Y_2O_2S$:Eu in a mixing ratio of 5 to 30 wt.% relative to the total amount of red phosphor.

The respective characteristics of these blue, green and red phosphors are shown in following table for comparison.

| Phosphors | Energy efficiency | Lumen efficiency | Decay time |
|---|---|---|---|
| blue ZnS:Ag | 20 to 25% | about 12% | 20 to 30 μsec |
| green ZnS:CuAl | about 25% | about 100% | 50 μsec |
| red $Y_2O_2S$:Eu | 10 to 13% | about 25% | 1 msec |
| (ZnCd)S:Ag | 17% | 13.6% | 50 μsec |

As will be clear from the table, since the (ZnCd)S:Ag are added to the red phsphor has a high energy efficiency as compared with the rear earth red phosphor, $Y_2O_2S$:Eu, the light emission from the short persistence (ZnCd)S:Ag makes an important contribution to the address detection by a light pen pick-up. Whereas, with respect to the rare earth phosphor $Y_2O_2S$:Eu having a relatively long decay time, since its lumen efficiency is high, the red light emission from this rare earth phosphor makes an important constribution to ordinary viewing.

Since (ZnCd)S:Ag has a high energy efficiency, the energy necessary for the address detection can be obtained by adding a relatively small amount of this phosphor to the rare earth red phosphor; for example 30 wt.%. Accordingly, the lowering of the brightness to a viewer caused by the added phosphor can be kept to about 86% of the brightness achieved when a single rare earth red phosphor is used. To reduce environmental pollution, the phosphor, (ZnCd)S:Ag added to the red phosphor can be replaced by the (ZnCd)S:Cu phosphor (ZnS:CdS=6:4), and similar effects achieved. In this case, the amount of Cd used can be reduced by half as compared with the case of using (ZnCd)S:Ag.

The range from 5 to 30 wt.% is selected because if more than 30 wt.% is added brightness is lowered to less than 85%, whereas if less than 5wt.% is added the effect of the detecting light for a light pen pick-up becomes insufficient.

A suitable light pen pick-up for use with such a colour cathode ray tube is one which can provide a detecting sensitivity of about the same degree for the respective red, green and blue lights. By the addition of the phosphor having a short decay time, the red light emission characteristic becomes such that the brightness falls rapidly in the early stage. Accordingly, if the detection level by the light pen pick-up is selected properly, the light emission of long decay time can be prevented from being detected and so, the address detection can be carried out positively.

### Claims

1. A colour cathode ray tube having a colour phosphor screen formed by coating red, green and blue phosphors, and in which said red phosphor is made by mixing (ZnCd)S:Ag or (ZnCd)S:Cu phosphor with a rare earth phosphor in an amount of 5 to 30 weight percent relative to the total amount of said red phosphor; characterized in that:
in the case of (ZnCd)S:Ag, ZnS:CdS=2:8, and in the case of (ZnCd)S:Cu, ZnS:CdS=6:4.
2. A colour cathode ray tube according to Claim 1, wherein said rare earth phosphor is $Y_2O_2S:Eu$.

### Patentansprüche

1. Farbkathodenstrahlröhre mit einem Farb-Leuchtstoffbildschirm, der durch Beschichten mit roten, grünen und blauen Leuchtstoffen gebildet ist und wobei man den roten Leuchtstoff durch Mischen von (ZnCd)S:Ag oder (ZnCd)S:Cu-Leuchtstoff mit einem Seltenerd-Leuchtstoff in einer Menge von 5 bis 30 Gew.-%, relativ zu der Gesamtmenge des roten Leuchtstoffs, herstellt, dadurch gekennzeichnet,
das das Verhältnis (ZnCd)S:Ag, ZnS:CdS gleich 2:8, und das Verhältnis von (ZnCd)S:Cu, ZnS:CdS gleich 6:4 ist.
2. Farbkathodenstrahlröhre nach Anspruch 1, bei der der Seltenerd-Leuchtstoff $Y_2O_2S:Eu$ ist.

### Revendications

1. Tube à rayons cathodiques en couleur possédant un écran luminescent en couleur formé par dépôt de luminophores rouges, verts et bleus, et dans lequel ledit luminophore rouge est fait par mélange du luminophore (ZnCd)S:Ag ou (ZnCd)S:Cu avec un luminophore à terres rares en une proportion pondérale de 5 à 30% par rapport à la quantité totale dudit luminophore rouge; caractérisé en ce que:
dans le cas de (ZnCd)S:Ag, ZnS:CdS=2:8, et, dans le cas de (ZnCd)S:Cu, ZnS:CdS=6:4.
2. Tube à rayons cathodiques en couleur selon la revendication 1, où ledit luminophore à terres rares est $Y_2O_2S:Eu$.